# EUROPÄISCHE PATENTANMELDUNG

(11) **EP 1 593 447 A1**
(43) Veröffentlichungstag der Anmeldung: **09.11.2005**
(21) Anmeldenummer: 05103423.9
(22) Anmeldetag: 27.04.2005
(51) Int. Cl.: B23B 47/34, B23B 51/04, B23Q 11/00

(54) **Staubabsaughaube für Kernbohrer**

(30) Priorität: 06.05.2004 DE 102004022366
(71) Anmelder: HILTI Aktiengesellschaft, 9494 Schaan (LI)
(72) Erfinder: Ohlendorf, Oliver, 80686 München (DE)
(74) Vertreter: Wildi, Roland

(57) **Zusammenfassung**

Eine Staubabsaughaube (1) für einen längs einer Drehachse (A) angetriebenen Dosensenker (2) zum Einbringen eines kreiszylinderförmigen Lochs (3) in eine Wandung (4) mit einem beidseitig stirnseitig zumindest teilweise offenen Haubenmantel (5) mit einer Stirnansetzkante (16) und einem in deren Längsdrittel angeordneten Absaugstutzen (6), dadurch gekennzeichnet, dass am Innenmantel (7) des Haubenmantels (5) zumindest zwei umfänglich versetzte Axialführungsmittel angeordnet sind, in welche jeweils zugeordnete Gleitmittel axial versetzbar geführt eingreifen, die mit einem sich radial zur Drehachse (A) erstreckenden, den Haubenmantel (5) zumindest teilweise abdichtenden Dichtschild (12) verbunden sind, der über ein konzentrisch angeordnetes Lagermittel drehfrei sowie axial fest mit einem Antriebsflansch (14) des Dosensenkers (2) verbindbar ist.

## Beschreibung

Die Erfindung bezeichnet eine Staubabsaughaube für einen Dosensenker zum Einbringen von kreiszylinderförmigen Löchern für Elektroinstallationsdosen in Wandungen bspw. aus Mauerwerk.

Ein Dosensenker ist ein Hohlbohrwerkzeug, welches eine von Schneidzähnen am freien Ende einer Bohrhülse gebildete Bohrkrone sowie in der Bohrhülse einen zentralen, gegenüber der Bohrkrone vorstehenden Innenzentrierungsbohrer aufweist und über ein standardisiertes Einsteckende von einem Drehbohrwerk antreibbar ist. Der beim Bohren abgetragene Bohrstaub wird üblicherweise mit am Aussenmantel der Bohrhülse ausgebildeten Wendeln aus dem Kreisringloch teilweise heraus befördert, wobei der im Kreisringloch verbleibende Staub die Schneidzähne zusetzt und somit die Bohrgeschwindigkeit herabsetzt. Der freigesetzte Staub führt zu einer Verunreinigung der Arbeitsumgebung.

Nach der EP218744 ist ein rotierender Dosensenker mit seinem Aussenmantel koaxial innerhalb einer dichtend an der Wandung anliegende Staubabsaughaube luftdicht geführt, die über einen Absaugstutzen mit einem Staubsauger verbunden ist. Die innenseitige Belüftung erfolgt über stirnseitige Lüftungsöffnungen im Deckel des Dosensenkers, wodurch der Luftstrom im Kreisringloch um die Bohrkrone herumgeleitet wird und dieses staubfrei bleibt. Eine derartige Staubabsaughaube ist nur für einen speziellen Bohrdurchmesser geeignet. Zudem sind Dosensenker mit Lüftungsöffnungen im Deckel unüblich.

Die Aufgabe der Erfindung besteht in der Realisierung einer Staubabsaughaube für handelsübliche Dosensenker unterschiedlichen Durchmessers.

Die Aufgabe wird im Wesentlichen durch die Merkmale des Anspruchs 1 gelöst. Vorteilhafte Weiterbildungen ergeben sich aus den Unteransprüchen.

So weist eine Staubabsaughaube für einen längs einer Drehachse angetriebenen Dosensenker zum Einbringen eines kreiszylinderförmigen Lochs in eine Wandung einen an beiden Stirnseiten zumindest teilweise offenen Haubenmantel mit einer Stirnansetzkante und einem in deren Längsdrittel angeordneten Absaugstutzen auf, wobei am Innenmantel des Haubenmantels zumindest zwei umfänglich versetzte Axialführungsmittel angeordnet sind, in welche jeweils zugeordnete Gleitmittel axial versetzbar geführt eingreifen, die mit einem sich radial zur Drehachse erstreckenden, den Haubenmantel zumindest teilweise abdichtenden Dichtschild verbunden sind, der über ein konzentrisch angeordnetes Lagermittel drehfrei sowie axial fest mit dem Antriebsflansch des Dosensenkers verbindbar ist.

Durch das im Inneren des Haubenmantels axial versetzbar geführte Dichtschild wird bei einer an einer Wandung angesetzten Staubabsaughaube mit einem im Innern drehfrei gelagerten Dosensenker ein zumindest teilweise luftströmungsdichter, variabler Saugraum ausgebildet, in dem über den Absaugstutzen ein Unterdruck zum Absaugen von Staub erzeugbar ist. Bei vorzugsweiser Verwendung eines Dosensenkers mit einer innerhalb des Antriebsflansches verlaufenden Saugleitung wird zudem in Umkehrung der vorgesehenen Strömungsrichtung eine stationäre Strömung über die Saugleitung von Innen nach Aussen des Dosensenkers ermöglicht. Mittels des üblicherweise standardisierten Antriebsflansches sind unterschiedliche Typen von Dosensenkern und Bohrdurchmessern mit derselben Staubabsaughaube kombinierbar.

Vorzugsweise sind genau drei Axialführungsmittel und zugeordnete Gleitmittel vorhanden, die jeweils umfänglich symmetrisch versetzt angeordnet sind, wodurch eine klemmfreie axiale Führung möglich ist.

Vorzugsweise sind die Axialführungsmittel als nach radial innen einkragende Führungsschienen ausgebildet, die jeweils von einem als Gleitschuh mit einem Axialführungsschlitz ausgebildeten Gleitmittel umfänglich beidseitig umfasst sind, wodurch nach dem Prinzip Nut-Feder eine kippfeste axiale Führung möglich ist.

Vorzugsweise ist das Lagermittel als Kugellager ausgebildet, wodurch nur geringe Restdrehmomente auf die Staubabsaughaube übertragen werden.

Die Erfindung wird bezüglich eines vorteilhaften Ausführungsbeispiels näher erläutert mit:
Fig. 1 als Staubabsaughaube mit Dosensenker im Längsschnitt, gemäss Ebene I-I in Fig. 2,
Fig. 2 im Querschnitt, gemäss Ebene II-II in Fig. 1.

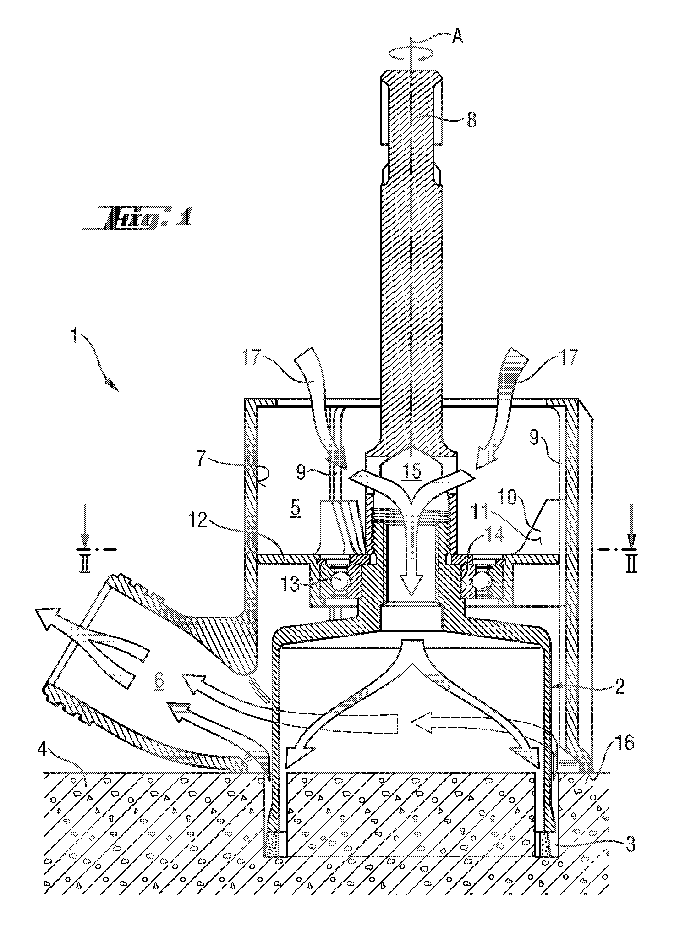

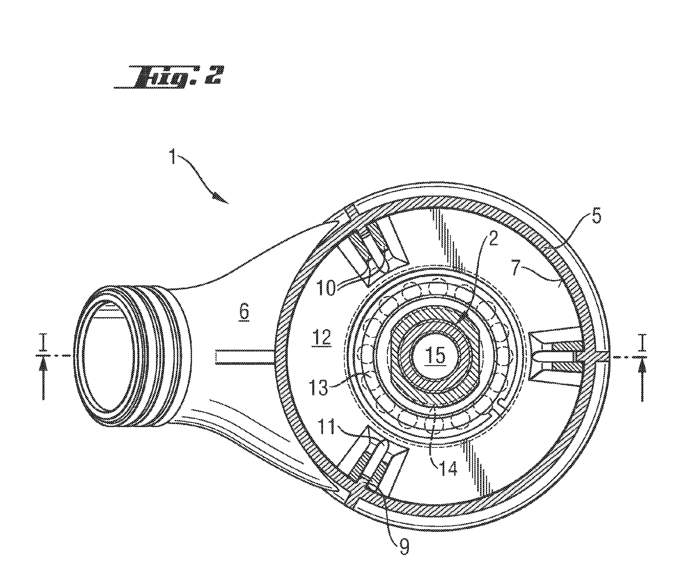

Nach den Fig. 1 und Fig. 2 weist eine Staubabsaughaube 1 für einen längs einer Drehachse A über ein Einsteckende 8 angetriebenen Dosensenker 2 zum Einbringen eines kreiszylinderförmigen Lochs 3 in eine Wandung 4 einen beidseitig stirnseitig offenen Haubenmantel 5 mit einer ebenen Stirnansetzkante 16 und einem in deren Längsdrittel angeordneten Absaugstutzen 6 auf. Am Innenmantel 7 des Haubenmantels 5 sind drei umfänglich symmetrisch versetzte Axialführungsmittel in Form von Führungsschienen 9 angeordnet, in welche jeweils zugeordnete Gleitmittel in Form von Gleitschuhen 10 mit Axialführungsschlitzen 11 axial versetzbar geführt eingreifen. Die Gleitschuhe 10 sind mit einem sich radial zur Drehachse A erstreckenden, den Haubenmantel 5 abdichtenden Dichtschild 12 verbunden. Das Dichtschild 12 ist über ein konzentrisch angeordnetes Lagermittel in Form eines Kugellagers 13 drehfrei sowie axial fest mit dem standardisierten Antriebsflansch 14 des Dosensenkers 2 verbunden. Über die innerhalb des Antriebsflansches 14 liegende Saugleitung 15 des Dosensenkers 2 bildet sich eine stationäre Luftströmung 17 von Innen nach Aussen des Dosensenkers 2 zum Absaugstutzen 6 aus.

## Patentansprüche

1. Staubabsaughaube für einen längs einer Drehachse (A) angetriebenen Dosensenker (2) zum Einbringen eines kreiszylinderförmigen Lochs (3) in eine Wandung (4) mit einem beidseitig stirnseitig zumindest teilweise offenen Haubenmantel (5) mit einer Stirnansetzkante (16) und einem in deren Längsdrittel angeordneten Absaugstutzen (6), **dadurch gekennzeichnet, dass** am Innenmantel (7) des Haubenmantels (5) zumindest zwei umfänglich versetzte Axialführungsmittel angeordnet sind, in welche jeweils zugeordnete Gleitmittel axial versetzbar geführt eingreifen, die mit einem sich radial zur Drehachse (A) erstreckenden, den Haubenmantel (5) zumindest teilweise abdichtenden Dichtschild (12) verbunden sind, der über ein konzentrisch angeordnetes Lagermittel drehfrei sowie axial fest mit einem Antriebsflansch (14) des Dosensenkers (2) verbindbar ist.

2. Staubabsaughaube nach Anspruch 1, **dadurch gekennzeichnet, dass** genau drei Axialführungsmittel und zugeordnete Gleitmittel vorhanden sind, die jeweils umfänglich symmetrisch versetzt angeordnet sind.

3. Staubabsaughaube nach Anspruch 1 oder 2, **dadurch gekennzeichnet, dass** die Axialführungsmittel als nach radial innen einkragende Führungsschienen (9) ausgebildet sind, die jeweils von einem als Gleitschuh (10) mit einem Axialführungsschlitz (11) ausgebildeten Gleitmittel umfänglich beidseitig umfasst sind.

4. Staubabsaughaube nach einem der vorherigen Ansprüche, **dadurch gekennzeichnet, dass** das Lagermittel als Kugellager (13) ausgebildet ist.
